# EUROPÄISCHE PATENTSCHRIFT

(11) **EP 3 642 583 B1**
(45) Veröffentlichungstag und Bekanntmachung des Hinweises auf die Patenterteilung: **02.08.2023**
(21) Anmeldenummer: 18732331.6
(22) Anmeldetag: 18.06.2018
(51) Int. Cl.: G01L 9/06, G01L 1/18, H01C 17/065

(54) **SCHICHTWIDERSTAND UND DÜNNFILMSENSOR**
FILM RESISTOR AND THIN-FILM SENSOR
RÉSISTANCE À COUCHE ET CAPTEUR À COUCHE MINCE

(30) Priorität: 19.06.2017 DE 102017113401
(43) Veröffentlichungstag der Anmeldung: 29.04.2020
(73) Patentinhaber: TDK Electronics AG, 81671 München (DE)
(72) Erfinder: MILKE, Bettina, 10783 Berlin (DE); OSTRICK, Bernhard, 14513 Teltow (DE)
(74) Vertreter: Epping - Hermann - Fischer
(86) Internationale Anmeldenummer: PCT/EP2018/066099
(87) Internationale Veröffentlichungsnummer: WO 2018/234233

(56) Entgegenhaltungen:
- US-A- 4 028 276
- RALF KOPPERT ET AL: "Structural and physical properties of highly piezoresistive nickel containing hydrogenated carbon thin films", DIAMOND AND RELATED MATERIALS, ELSEVIER SCIENCE PUBLISHERS, AMSTERDAM, NL, Bd. 25, 26. Januar 2012 (2012-01-26), Seiten 50-58, XP028483785, ISSN: 0925-9635, DOI: 10.1016/J.DIAMOND.2012.01.031 [gefunden am 2012-02-12]

## Beschreibung

Die Erfindung betrifft einen Schichtwiderstand und einen Dünnfilmsensor, der den Schichtwiderstand aufweist.

In Dünnfilmsensoren, in denen Schichtwiderstände auf einer Membran aufgebracht sind, sollten die thermischen Ausdehnungskoeffizienten der einzelnen Komponenten aufeinander angepasst sein, um Stress während der Messung zu verhindern.

Weiterhin ist eine hohe Sensitivität des Schichtwiderstands für eine gute Messgenauigkeit erforderlich. Die Sensitivität kann durch den k-Faktor (auch: "gage factor") angegeben werden.

Schließlich ist auch die mechanische Stabilität, insbesondere bei zyklischer Biegebeanspruchung, wie sie beispielsweise in Drucksensoren vorkommen kann, relevant. Eine Messgröße für die mechanische Stabilität ist das Elastizitätsmodul (E-Modul).

Aus der Druckschrift US 4,028,276 sind druck-sensitive elastische Widerstands-Zusammensetzungen bekannt. Die Druckschrift Ralf Koppert et al., Diamond & Related Materials, 25 (2012), 50-58 beschreibt strukturelle und physikalische Eigenschaften von hoch piezoresistiven Nickel enthaltenden hydrierten Kohlenstofffilmen.

Aufgabe mindestens einer Ausführungsform der Erfindung ist es, einen Schichtwiderstand mit verbesserten Eigenschaften bereitzustellen. Eine weitere Aufgabe mindestens einer Ausführungsform ist es, einen Dünnfilmsensor mit einem solchen Schichtwiderstand bereitzustellen.

Diese Aufgaben werden durch einen Schichtwiderstand gemäß dem unabhängigen Anspruch 1 gelöst. Es wird ein Schichtwiderstand angegeben, der eine piezoresistive Schicht aufweist, wobei die piezoresistive Schicht ein erstes Übergangsmetallcarbid umfasst.

Die piezoresistive Schicht kann insbesondere als Dünnfilm ausgeführt sein, und eine Dicke aufweisen, die das 1- bis 5-fache der Korngröße des Übergangsmetallcarbids entspricht. Die piezoresistive Schicht hat die Eigenschaft, auf Verbiegungen mit Widerstandsänderungen zu reagieren und ermöglicht somit Dehn-, Kraft- und Druckmessungen, wenn sie in einem Dünnfilmsensor eingesetzt wird.

Carbide der Übergangsmetalle, insbesondere der Übergangsmetallgruppen IV, V und VI, weisen eine hohe Robustheit auch bei hohen Temperaturen, insbesondere Temperaturen von bis zu 300°C, und hohen Drücken von bis zu 1000 bar auf. Aufgrund ihrer mechanischen Stabilität weist die piezoresistive Schicht und damit auch der Schichtwiderstand ein geringes E-Modul, beispielsweise ein E-Modul ≤ 500 GPa auf.

Weiterhin können die Ausdehnungskoeffizienten von Übergangsmetallcarbiden gut an die Ausdehnungskoeffizienten von typischen Trägermaterialien beziehungsweise Membranmaterialien, wie sie in Dünnfilmsensoren eingesetzt werden, angepasst werden. Widerstandsänderungen der piezoresistiven Schicht, die durch unterschiedliche Ausdehnungskoeffizienten der piezoresistiven Schicht und beispielsweise einer Membran in einem Dünnfilmsensor zustande kommen, können so vermieden werden. Dabei entspricht der thermische Ausdehnungskoeffizient der piezoresistiven Schicht vorzugsweise dem Ausdehnungskoeffizienten der Membran. Genau abgestimmte thermische Ausdehnungskoeffizienten der piezoresistiven Schicht minimieren den Stress zwischen der piezoresistiven Schicht und der Membran, was zu einer höheren Toleranz gegenüber externem thermischen Stress führt und damit eine höhere Langzeitstabilität und eine hohe Messgenauigkeit in einem Dünnfilmsensor ermöglicht. Irreversible Änderungen der Schicht und damit eine Alterung des Schichtwiderstands werden durch abgestimmte thermische Ausdehnungskoeffizienten somit minimiert und die Lebenszeit des Schichtwiderstands erhöht. Damit ist ein solcher Schichtwiderstand geeignet, in einem Dünnfilmsensor eingesetzt zu werden.

Das erste Übergangsmetallcarbid enthält ein Übergangsmetall, das aus einer Gruppe ausgewählt ist, die Ti, V, Cr, Zr, Nb, Mo, Hf, Ta, W und Kombinationen daraus umfasst. Damit enthält das Übergangsmetallcarbid ein Übergangsmetall der Übergangsmetallgruppen IV, V und/oder VI.

Gemäß einer Ausführungsform ist das erste Übergangsmetallcarbid Chromcarbid Cr₃C₂. Chromcarbid Cr₃C₂ kann zur Bildung der piezoresistiven Schicht beispielsweise in einem CVD (Chemical Vapor Deposition)-Verfahren oder mittels thermischem Spraycoating aufgebracht werden und weist sehr gute Korrosions- und Oxidationsbeständigkeit auf. Damit ist Chromcarbid als Material für den Schichtwiderstand in einem Dünnfilmsensor insbesondere auch für die Anwendung bei hohen Temperaturen und Drücken gut geeignet.

Gemäß einer Ausführungsform weist das erste Übergangsmetallcarbid einen Übergangsmetallüberschuss auf. In der Regel weisen die Übergangsmetallcarbide keine exakt definierte Stöchiometrie auf. Der Metallüberschuss kann jedoch durch die allgemeine Formel MCₓ ausgedrückt werden, wobei M = Ti, V, Cr, Zr, Nb, Mo, Hf, Ta, W und Kombinationen daraus ist und x ≤ 1.

Übergangsmetallnitride, die mit MNₓ ausgedrückt werden können und worin M ein Übergangsmetall darstellt, können in ihrer Zusammensetzung sowohl einen Metallüberschuss (x < 1) als auch ein Metalldefizit (x > 1) aufweisen. Dies führt zu chemischer Instabilität und damit zu schwer kontrollierbaren Abscheideprozessen. Die Instabilität wird dadurch erzeugt, dass sowohl Metall- als auch Stickstoffplätze vakant sind und von anderen Atomen besetzt werden können.

Im Gegensatz dazu sind bei den Übergangsmetallcarbiden Metalldefizite, also x > 1, unüblich. Damit sind Übergangsmetallcarbide chemisch stabiler als Übergangsmetallnitride. In Übergangsmetallcarbiden sind Ersetzungen mit fremden Atomen wie zum Beispiel Stickstoff oder Sauerstoff nur auf den Zwischengitterplätzen des Kohlenstoffs zu finden. Dies ist vor allem bei der Verwendung als piezoresistive Schicht in einem Dünnfilmsensor von Bedeutung, da die elektrischen Eigenschaften des Materials von der Fähigkeit zur Ausbildung von festen Lösungen, also Mischkristallen, mit anderen Carbiden oder Nitriden der Übergangsmetalle aufgrund von Isomorphismen im Kristallgitter abhängen. Beispielsweise wird bei einer Kombination von Cr₃C₂ und WC das Kornwachstum der Keramik eingegrenzt.

Aufgrund der hohen chemischen Stabilität von Übergangsmetallcarbiden kann somit in vielen Anwendungsfällen des Schichtwiderstands auf eine Passivierung der piezoresistiven Schicht durch beispielsweise Si₃N₄ verzichtet werden.

Es wird beschrieben, dass die piezoresistive Schicht aus dem Übergangsmetallcarbid besteht. Beispielsweise besteht die piezoresistive Schicht aus Chromcarbid.

Die piezoresistive Schicht weist zumindest ein Zusatzmaterial auf, das aus Übergangsmetallnitriden, zweiten Übergangsmetallcarbiden und Mischungen daraus ausgewählt ist. Dabei stellt das erste Übergangsmetallcarbid den Hauptbestandteil der piezoresistiven Schicht dar. Das Zusatzmaterial kann mit einem Anteil von bis zu 50 Massen% vorhanden sein. Beispielsweise kann die piezoresistive Schicht vorwiegend Cr₃C₂ enthalten und Zusatzmaterialien in Form von Nitriden oder Carbiden anderer Übergangsmetalle enthalten. Die Metalle M der Übergangsmetallnitride und zweiten Übergangsmetallcarbide können beispielsweise ausgewählt sein aus Ti, V, Cr, Zr, Nb, Mo, Hf, Ta, W und Kombinationen daraus.

Gemäß einer Ausführungsform ist das Zusatzmaterial Wolframcarbid WC.

Gemäß einer Ausführungsform bildet das erste Übergangsmetallcarbid mit dem Zusatzmaterial einen Mischkristall. Ein solcher Mischkristall kann beispielsweise die Formel M(C₁₋ₓNₓ) aufweisen, wobei M wieder ausgewählt sein kann aus Ti, V, Cr, Zr, Nb, Mo, Hf, Ta, W und Kombinationen daraus. Durch die Bildung eines Mischkristalls kann beispielsweise der thermische Ausdehnungskoeffizient der piezoelektrischen Schicht an die Membran oder den Träger, auf denen sie in einem Dünnfilmsensor aufgebracht ist, angepasst werden. Weiterhin können die elektrischen und mechanischen Eigenschaften der piezoelektrischen Schicht, die einen Mischkristall enthält, gut an die Anforderungen in einem Dünnfilmsensor eingestellt werden.

Gemäß einer Ausführungsform ist das erste Übergangsmetallcarbid polykristallin. In der piezoresistiven Schicht liegen somit einzelne Kristalle des ersten Übergangsmetallcarbids beziehungsweise des Mischkristalls, den das erste Übergangsmetallcarbid mit einem Zusatzmaterial bildet, vor.

Gemäß einer weiteren Ausführungsform weisen die Kristalle des ersten Übergangsmetallcarbids an ihrer Oberfläche eine Oxidschicht auf. Bildet das erste Übergangsmetallcarbid mit einem Zusatzmaterial einen Mischkristall, so können auch die Kristalle des Mischkristalls an ihrer Oberfläche eine Oxidschicht aufweisen. Übergangsmetallcarbide bilden leicht stabile Oberflächenoxide an der Oberfläche ihrer Kristalle beziehungsweise Körner aus. Eine Oxidschicht an der Oberfläche der Kristalle schützt zum einen die piezoresistive Schicht und bildet zum anderen elektrische Korngrenzbarrieren zwischen den leitfähigen Körnern aus, die den Widerstandswert und damit den piezoresistiven Effekt der Schicht vergrößern.

Gemäß einer Ausführungsform weist die piezoresistive Schicht einen thermischen Ausdehnungskoeffizienten zwischen einschließlich 9 ppm/K und einschließlich 15 ppm/K auf. Insbesondere kann der thermische Ausdehnungskoeffizient 10 ppm/K betragen. Ein Ausdehnungskoeffizient aus diesem Bereich, beispielsweise 10 ppm/K, ist gut angepasst an beziehungsweise entspricht dem Ausdehnungskoeffizienten von Träger- beziehungsweise Membranmaterialien, beispielsweise Metalle, die üblicherweise in Dünnfilmsensoren verwendet werden und auf denen der Schichtwiderstand angeordnet wird.

Gemäß einer weiteren Ausführungsform weist die piezoresistive Schicht einen spezifischen Widerstand von mehr als 70 µΩcm bei einer Temperatur von 20°C auf. Somit kann die piezoresistive Schicht eine hohe Sensitivität bei Raumtemperatur aufweisen.

Weiterhin kann die piezoresistive Schicht einen k-Faktor aufweisen, der größer als 2 ist. Damit weist die piezoresistive Schicht eine hohe Sensitivität auf.

Gemäß einer weiteren Ausführungsform weist der Schichtwiderstand elektrische Kontakte auf. Insbesondere können die elektrischen Kontakte das erste Übergangsmetallcarbid aufweisen. Somit können die piezoresistive Schicht und die Kontakte dasselbe erste Übergangsmetallcarbid als Hauptbestandteil aufweisen. Es wird beschrieben, dass die piezoresistive Schicht und die Kontakte aus demselben ersten Übergangsmetallcarbid bestehen.

Es wird weiterhin ein Dünnfilmsensor angegeben, der einen Schichtwiderstand gemäß den obigen Ausführungen aufweist. Sämtliche in Bezug auf den Schichtwiderstand genannten Merkmale gelten somit auch für den Dünnfilmsensor und umgekehrt.

Gemäß einer Ausführungsform weist der Dünnfilmsensor eine Membran auf, auf der der Schichtwiderstand angeordnet ist, und einen Trägerkörper, an dem die Membran befestigt ist. Dabei ist die Membran relativ zu dem Trägerkörper beweglich.

Insbesondere ist die Membran so an dem Trägerkörper befestigt, dass sie relativ zu dem Trägerkörper verbogen werden beziehungsweise schwingen kann. Das bedeutet, dass die Membran auf Dehn-, Kraft- oder Druckeinwirkung mit Verbiegungen reagieren kann, was zu Widerstandsänderungen in dem Schichtwiderstand führt.

Die Membran und der Schichtwiderstand können in direktem mechanischem Kontakt miteinander sein oder es können noch weitere Elemente, beispielsweise eine Isolationsschicht zwischen der Membran und dem Schichtwiderstand angeordnet sein.

Gemäß einer Ausführungsform weisen die Membran und der Trägerkörper ein Material auf, das aus Keramik und Metall ausgewählt ist. Dabei können Membran und Trägerkörper unabhängig voneinander eines dieser Materialien aufweisen oder sie können einen Körper bilden, der eines der Materialien enthält.

Gemäß einer Ausführungsform weisen die Membran und der Trägerkörper ein Material auf, das aus Edelstahl und Yttriumstabilisiertem Zirkoniumoxid (YSZ) ausgewählt ist. Membran und Trägerkörper können somit beide Edelstahl oder YSZ aufweisen. Die Ausdehnungskoeffizienten von Edelstählen und YSZ entsprechen besonders gut den Ausdehnungskoeffizienten, die in Übergangsmetallcarbiden eingestellt werden können, insbesondere auch dem Ausdehnungskoeffizienten von Chromcarbid.

Gemäß einer weiteren Ausführungsform weist der Dünnfilmsensor mindestens zwei Schichtwiderstände wie oben beschrieben auf. Die Schichtwiderstände können zu einer Brückenschaltung miteinander verschaltet sein.

Gemäß einer weiteren Ausführungsform kann einer der Schichtwiderstände zur Temperaturmessung ausgebildet sein. Der Schichtwiderstand zur Temperaturmessung kann dasselbe erste Übergangsmetallcarbid aufweisen, wie der oder die übrigen Schichtwiderstände. Dabei kann er aus dem ersten Übergangsmetallcarbid bestehen oder dieses enthalten.

Der Schichtwiderstand zur Temperaturmessung kann in einem Bereich des Trägerkörpers oder der Membran angeordnet sein, der eine geringere Verformung erfährt als andere Bereiche des Trägerkörpers oder der Membran.

Anhand der Figur und Ausführungsbeispielen werden bestimmte Ausführungsformen der Erfindung näher erläutert.

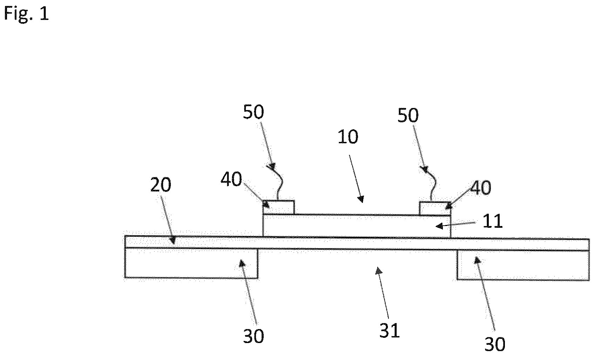

Figur 1 zeigt eine schematische Schnittansicht eines Dünnfilmsensors gemäß eines Ausführungsbeispiels.

In den Ausführungsbeispielen und Figuren können gleiche, gleichartige oder gleichwirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente zur besseren Darstellbarkeit und/oder zum besseren Verständnis übertrieben groß dargestellt sein.

Figur 1 zeigt eine schematische Schnittansicht eines Dünnfilmsensors gemäß eines Ausführungsbeispiels. Der Trägerkörper 30 weist eine Öffnung 31 auf. Andere, hier nicht gezeigte Formen des Trägerkörpers 30 sind ebenfalls denkbar. Beispielsweise kann der Trägerkörper 30 so geformt sein, dass die Membran 20 nur mit einem ihrer Seitenränder daran befestigt ist.

Auf dem Trägerkörper 30 ist eine Membran 20 so aufgebracht, dass sie zwischen dem Trägerkörper 30, innerhalb der Öffnung 31, relativ zu dem Trägerkörper 30 frei beweglich ist. Insbesondere kann die Membran 20 relativ zu dem Trägerkörper 30 verbogen werden beziehungsweise schwingen.

Auf der Membran 20, insbesondere in dem Bereich, in dem die Membran 20 relativ zu dem Trägerkörper 30 frei beweglich ist, befindet sich der Schichtwiderstand 10, der die piezoresistive Schicht 11 enthält. Auf der piezoresistiven Schicht 11 befinden sich an zwei entgegengesetzten Enden elektrische Kontakte 40, die über Bonddrähte 50 elektrisch kontaktiert sind.

Erfährt die Membran 20 eine Verformung, wird auch die piezoresistive Schicht 11 verformt, was aufgrund des piezoresistiven Effekts zu einer Widerstandänderung führt, die von den Kontakten 40 detektiert werden kann.

Der Dünnfilmsensor kann auch mehrere Schichtwiderstände 10 aufweisen (hier nicht gezeigt). Beispielsweise kann der Dünnfilmsensor vier Schichtwiderstände aufweisen. Die Schichtwiderstände 10 können zu einer Messbrücke verschaltet sein, mit der beispielsweise ein Druck gemessen werden kann. Ebenso können auch Kräfte und Dehnungen der Membran 20 gemessen werden.

In diesem Ausführungsbeispiel enthält die piezoresistive Schicht 11 als Hauptbestandteil Cr₃C₂. Dieses kann mit Zusatzmaterialien, wie beispielsweise anderen Nitriden oder Carbiden der Übergangsmetalle, insbesondere mit WC, Mischkristalle bilden. Die Kontakte 40 enthalten als Hauptbestandteil ebenfalls Cr₃C₂. Der Trägerkörper 30 und die Membran 20 bestehen aus Edelstahl oder YSZ.

Die piezoresistive Schicht sowie die Membran 20 und der Trägerkörper 30 weisen aneinander angepasste Ausdehnungskoeffizienten auf, beispielsweise einen Ausdehnungskoeffizienten von jeweils 10 ppm/K auf. Damit entsteht zwischen der Membran 20 und dem Schichtwiderstand 10 kein Stress während der Messung, der zu Drifts oder einer Zerstörung des Dünnfilmsensors führen könnte.

### Bezugszeichenliste

- 10: Schichtwiderstand
- 11: piezoresistive Schicht
- 20: Membran
- 30: Trägerkörper
- 31: Öffnung
- 40: Kontakt
- 50: Bonddraht

## Patentansprüche

1. Schichtwiderstand (10) aufweisend eine piezoresistive Schicht, **dadurch gekennzeichnet, dass**
die piezoresistive Schicht (11) ein erstes Übergangsmetallcarbid als Hauptbestandteil und zumindest ein Zusatzmaterial aufweist, das aus Übergangsmetallnitriden, zweiten Übergangsmetallcarbiden und Mischungen daraus ausgewählt ist,
wobei das erste Übergangsmetallcarbid ein Übergangsmetall enthält, das aus einer Gruppe ausgewählt ist, die Ti, V, Cr, Zr, Nb, Mo, Hf, Ta, W und Kombinationen daraus umfasst.

2. Schichtwiderstand (10) gemäß dem vorherigen Anspruch, wobei das erste Übergangsmetallcarbid Cr₃C₂ ist.

3. Schichtwiderstand (10) gemäß einem der vorherigen Ansprüche, wobei das erste Übergangsmetallcarbid einen Übergangsmetallüberschuss aufweist.

4. Schichtwiderstand (10) nach einem der vorherigen Ansprüche, wobei das Zusatzmaterial Wolframcarbid ist.

5. Schichtwiderstand (10) nach einem der vorherigen Ansprüche, wobei das erste Übergangsmetallcarbid und das Zusatzmaterial einen Mischkristall bilden.

6. Schichtwiderstand (10) gemäß einem der vorherigen Ansprüche, wobei das erste Übergangsmetallcarbid polykristallin ist.

7. Schichtwiderstand (10) gemäß dem vorherigen Anspruch, wobei die Kristalle des ersten Übergangsmetallcarbids an ihrer Oberfläche eine Oxidschicht aufweisen.

8. Schichtwiderstand (10) gemäß einem der vorherigen Ansprüche, wobei die piezoresistive Schicht (11) einen thermischen Ausdehnungskoeffizienten zwischen einschließlich 9 ppm/K und einschließlich 15 ppm/K aufweist.

9. Schichtwiderstand (10) gemäß einem der vorherigen Ansprüche,
weiterhin aufweisend elektrische Kontakte (40), die das erste Übergangsmetallcarbid aufweisen.

10. Dünnfilmsensor aufweisend einen Schichtwiderstand (10) gemäß einem der vorherigen Ansprüche.

11. Dünnfilmsensor gemäß dem vorherigen Anspruch, aufweisend eine Membran (20), auf der der Schichtwiderstand (10) angeordnet ist, und einen Trägerkörper (30), an dem die Membran (20) befestigt ist, wobei die Membran (20) relativ zu dem Trägerkörper (30) beweglich ist.

12. Dünnfilmsensor gemäß dem vorherigen Anspruch, wobei die Membran (20) und der Trägerkörper (30) ein Material aufweisen, das aus Keramik und Metall ausgewählt ist.

13. Dünnfilmsensor gemäß dem vorherigen Anspruch,
wobei die Membran (20) und der Trägerkörper (30) ein Material aufweisen, das aus Edelstahl und Yttrium stabilisiertem Zirkoniumoxid ausgewählt ist.

14. Dünnfilmsensor gemäß einem der Ansprüche 10 bis 12, aufweisend mindestens zwei Schichtwiderstände (10) gemäß einem der Ansprüche 1 bis 9.

15. Dünnfilmsensor gemäß dem vorhergehenden Anspruch, wobei einer der Schichtwiderstände (10) zur Temperaturmessung ausgebildet ist.

## Claims

1. Film resistor (10) comprising a piezoresistive layer, **characterized in that**
the piezoresistive layer (11) comprises a first transition metal carbide as main constituent and at least one additive material selected from among transition metal nitrides, second transition metal carbides and mixtures thereof,
wherein the first transition metal carbide contains a transition metal selected from a group comprising Ti, V, Cr, Zr, Nb, Mo, Hf, Ta, W and combinations thereof.

2. Film resistor (10) according to the preceding claim, wherein the first transition metal carbide is Cr₃C₂.

3. Film resistor (10) according to any of the preceding claims, wherein the first transition metal carbide has an excess of transition metal.

4. Film resistor (10) according to any of the preceding claims, wherein the additive material is tungsten carbide.

5. Film resistor (10) according to any of the preceding claims, wherein the first transition metal carbide and the additive material form a mixed crystal.

6. Film resistor (10) according to any of the preceding claims, wherein the first transition metal carbide is polycrystalline.

7. Film resistor (10) according to the preceding claim, wherein the crystals of the first transition metal carbide have an oxide layer on their surface.

8. Film resistor (10) according to any of the preceding claims, wherein the piezoresistive layer (11) has a coefficient of thermal expansion in the range from 9 ppm/K inclusive to 15 ppm/K inclusive.

9. Film resistor (10) according to any of the preceding claims,
which further comprises electric contacts (40) which comprise the first transition metal carbide.

10. Thin-film sensor comprising a film resistor (10) according to any of the preceding claims.

11. Thin-film sensor according to the preceding claim, comprising a membrane (20) on which the film resistor (10) is arranged and a support body (30) to which the membrane (20) is fastened, with the membrane (20) being movable relative to the support body (30).

12. Thin-film sensor according to the preceding claim, wherein the membrane (20) and the support body (30) comprise a material selected from among ceramic and metal.

13. Thin-film sensor according to the preceding claim, wherein the membrane (20) and the support body (30) comprise a material selected from among stainless steel and yttrium-stabilized zirconium oxide.

14. Thin-film sensor according to any of Claims 10 to 12, comprising at least two film resistors (10) according to any of Claims 1 to 9.

15. Thin-film sensor according to the preceding claim, wherein one of the film resistors (10) is configured for temperature measurement.

## Revendications

1. Résistance stratifiée (10) présentant une couche piezorésistive, **caractérisée en ce que** la couche piezorésistive (11) présente un premier carbure de métal de transition comme constituant principal et au moins un matériau supplémentaire qui est choisi parmi les nitrures de métal de transition, des deuxièmes carbures de métal de transition et leurs mélanges, le premier carbure de métal de transition contenant un métal de transition qui est choisi dans un groupe comprenant Ti, V, Cr, Zr, Nb, Mo, Hf, Ta, W et leurs combinaisons.

2. Résistance stratifiée (10) selon la revendication précédente, le premier carbure de métal de transition étant le Cr₃C₂.

3. Résistance stratifiée (10) selon l'une quelconque des revendications précédentes, le premier carbure de métal de transition présentant un excès de métal de transition.

4. Résistance stratifiée (10) selon l'une quelconque des revendications précédentes, le matériau supplémentaire étant le carbure de tungstène.

5. Résistance stratifiée (10) selon l'une quelconque des revendications précédentes, le premier carbure de métal de transition et le matériau supplémentaire formant un cristal mixte.

6. Résistance stratifiée (10) selon l'une quelconque des revendications précédentes, le premier carbure de métal de transition étant polycristallin.

7. Résistance stratifiée (10) selon la revendication précédente, les cristaux du premier carbure de métal de transition présentant une couche d'oxyde sur leur surface.

8. Résistance stratifiée (10) selon l'une quelconque des revendications précédentes, la couche piezorésistive (11) présentant un coefficient de dilatation thermique entre 9 ppm/K et 15 ppm/K, ces deux valeurs étant comprises.

9. Résistance stratifiée (10) selon l'une quelconque des revendications précédentes, présentant en outre des contacts électriques (40) qui présentent le premier carbure de métal de transition.

10. Capteur en film mince présentant une résistance stratifiée (10) selon l'une quelconque des revendications précédentes.

11. Capteur en film mince selon la revendication précédente, présentant une membrane (20), sur laquelle est agencée la résistance stratifiée (10), et un corps support (30), auquel la membrane (20) est fixée, la membrane (20) étant mobile par rapport au corps support (30) .

12. Capteur en film mince selon la revendication précédente, la membrane (20) et le corps support (30) présentant un matériau choisi parmi la céramique et le métal.

13. Capteur en film mince selon la revendication précédente, la membrane (20) et le corps support (30) présentant un matériau choisi parmi l'acier inoxydable et l'oxyde de zirconium stabilisé à l'yttrium.

14. Capteur en film mince selon l'une quelconque des revendications 10 à 12, présentant au moins deux résistances stratifiées (10) selon l'une quelconque des revendications 1 à 9.

15. Capteur en film mince selon la revendication précédente, au moins l'une des résistances stratifiées (10) étant conçue pour la mesure de la température.
